**Europäisches Patentamt**

**European Patent Office**

**Office européen des brevets**

(19)

(11) Veröffentlichungsnummer: **0 117 009**
**B1**

(12) # EUROPÄISCHE PATENTSCHRIFT

(45) Veröffentlichungstag der Patentschrift:
03.09.86

(21) Anmeldenummer: **84200225.5**

(22) Anmeldetag: **20.02.84**

(51) Int. Cl.⁴: **C 03 B 37/025, C 03 C 15/00**

(54) Verfahren zum Herstellen einer massiven Vorform zum Ziehen optischer Fasern.

(30) Priorität: **22.02.83 NL 8300650**

(43) Veröffentlichungstag der Anmeldung:
**29.08.84 Patentblatt 84/35**

(45) Bekanntmachung des Hinweises auf die Patenterteilung:
**03.09.86 Patentblatt 86/36**

(84) Benannte Vertragsstaaten:
**AT BE DE GB IT NL SE**

(56) Entgegenhaltungen:
**FR-A-2 504 514**
**GB-A-2 084 988**

**EUROPEAN CONFERENCE ON OPTICAL COMMUNICATION, Cannes, 21.-24. September 1982, Seiten 66-69, SEE, FR. P. BACHMANN et al.: "Fluorine doped single mode and step index fibres prepared by the low pressure PCVD-Process"**

(73) Patentinhaber: **N.V. Philips' Gloeilampenfabrieken, Groenewoudseweg 1, NL- 5621 BA Eindhoven (NL)**

(72) Erfinder: **Pluijms, René Andreas Maria, c/o INT. OCTROOIBUREAU B.V. Prof.Holstlaan 6, NL- 5656 AA Eindhoven (NL)**
Erfinder: **Van der Ree, Pieter, c/o INT. OCTROOIBUREAU B.V. Prof.Holstlaan 6, NL- 5656 AA Eindhoven (NL)**
Erfinder: **Koel, Gerrit Jan, c/o INT. OCTROOIBUREAU B.V. Prof.Holstlaan 6, NL- 5656 AA Eindhoven (NL)**
Erfinder: **Peelen, Jan Gerard Jacob, c/o INT. OCTROOIBUREAU B.V. Prof.Holstlaan 6, NL- 5656 AA Eindhoven (NL)**

(74) Vertreter: **Auwerda, Cornelis Petrus, INTERNATIONAAL OCTROOIBUREAU B.V. Prof. Holstlaan 6, NL- 5656 AA Eindhoven (NL)**

EP 0 117 009 B1

2

## Beschreibung

Die Erfindung bezieht sich auf ein Verfahren zum Herstellen einer massiven Vorform zum Ziehen optischer Fasern, worin eine Vorform, die zentral einen sich in der Längsrichtung erstreckenden Kanal aufweist und wobei wenigstens derjenige Teil der Vorform, der den Kanal begrenzt, aus mit einem im Vergleich zu $SiO_2$ relativ flüchtigen Dotierungsmittel dotiertem Quarzglas besteht, auf eine Temperatur erhitzt wird, bei der der Kanal sich spontan schliesst und unter Hindurchführung eines haltigen Ätzmittels, das aus einem sauerstoff- und fluorhaltigen gasformigen Gemisch besteht, eine massive Vorform gleicher Länge gebildet wird.

Vorformen, die zentral einen sich in der Längsrichtung erstreckenden Kanal aufweisen, werden bei mehreren Herstellungsverfahren zum Herstellen optischer Fasern als Zwischenerzeugnis benutzt. Als Beispiel lässt sich nennen ein Verfahren, bei dem auf einem Dorn glasartige Teilchen deponiert werden bis die gewünschte Materialmenge vorhanden ist, wonach der Dorn entfernt wird. Bei anderen Verfahren (MCVD, PCVD) werden Rohre aus Quarzglas innerlich mit glasartigem Material bedeckt. Dabei entstehen ebenfalls hohle Vorformen.

Zur Zeit ist es allgemein üblich, den sich in der Längsrichtung erstreckenden Kanal vor dem Ziehen der Faser in einem einzelnen Herstellungsschritt zu schliessen. Dies bietet wesentliche Vorteile gegenüber Verfahren bei denen unmittelbar Fasern aus hohlen Vorformen gezogen werden. Massive Vorformen können beispielsweise längere Zeit aufbewahrt werden, ohne dass der innere Teil, der für den Lichttransport bestimmt ist, durch die Atmosphäre verunreinigt werden kann.

Beim Schliessen des zentral liegenden Kanals wird beispielsweise wie folgt verfahren. Längs der sich drehenden Vorform wird eine Erhitzungszone, beispielsweise ein Brenner, mit einer gleichmässigen Geschwindigkeit hin und her bewegt. Unter dem Einfluss der Oberflächenspannung nimmt der Durchmesser des Kanals dabei allmählich immer mehr ab, bis der Kanal sich beim letzten Mal, dass die Erhitzungszone passiert, sich völlig schliesst. Dieses Verfahren wird insbesondere bei hohlen Vorformen angewandt, die durch ein MCVD- oder PCVD-Verfahren erhalten worden sind. Bei porösen Vorformen, die aus glasartigen Teilchen aufgebaut sind, schliesst sich der Kanal beim Konsolidieren bzw. Verglasen.

Ein allgemein verwendetes Dotierungsmittel bei der Herstellung optischer Fasern aus Quarzglas, ist Germaniumdioxid ($GeO_2$). Beim Kollabieren von mit einem zentral liegenden Kanal versehenen Vorformen, wobei wenigstens derjenige Teil der Vorform, der unmittelbar an den Kanal grenzt, aus mit einem relativ flüchtigen Dotierungsmittel wie Germaniumdioxid dotiertem Quarzglas besteht, kann ein Teil des Dotierungsmittels verdampfen. Dies ergibt eine Störung des Brechzahlprofils. Dabei spielt auch die Diffusion des Dotierungsmittels aus weiter von dem zentralen Kanal liegenden Teilen der Vorform eine Rolle. Die Profilstörung beeinträchtigt die Bandbreite der optischen Faser.

Es wurde bereits vorgeschlagen, die Profilstörung dadurch zu verringern, dass beim Kollabieren der hohlen Vorform ein fluorhaltiges gasförmiges Ätzmittel durch den zentralen Kanal hindurchgeführt wird. Das gasförmige Ätzmittel reagiert mit einer an den Kanal grenzenden durch Verdampfung an Dotierungsmittel verarmten Schicht unter der Bildung gasförmiger Ätzerzeugnisse (siehe beispielsweise GB-A-2 084 958 und FR-A-2 504 514). Als gasförmige Ätzmittel werden Gemische aus Sauerstoff und Dichloridfluoromethan ($CCl_2F_2$) Schwefelhexafluorid ($SF_6$), Kohlenstofftetrachlorid ($CF_4$), Trichlormonofluormethan ($CCl_3F$) und Monochlortrifluormethan ($CClF_3$) genannt.

In der Praxis hat es sich herausgestellt, dass die genannten Verbindungen keine befriedigenden Ergebnisse herbeiführen. Es stellt sich heraus, dass eine zwar verringerte Störung des Brechzahlprofils sich nicht vermeiden lässt. Dazu kann beispielsweise auf die Figur in der obengenannten französischen Patentanmeldung FR-A-2.504.514 und auf den zugeordneten Teil der Beschreibung verwiesen werden.

Die Erfindung hat nun zur Aufgabe, eine Störung des Brechzahlprofils völlig zu vermeiden. Es hat sich nun herausgestellt, dass dies mit einem Verfahren der eingangs genannten Art erzielt werden kann, das das Kennzeichen aufweist, dass das fluorhaltige Gas des Ätzmittels, das beim Schliessen durch denzentralen Kanal hindurchgeführt wird, aus einer oder mehreren gasförmigen Kohlenstofffluorverbindung(en) aus der Gruppe Hexafluoroäthan ($C_2F_6$) Oktafluoropropan ($C_3F_8$) und Dekafluoro-n-butan ($C_4F_{10}$) bewählt wird. Durch Verwendung der genannten Verbindung(en) wird erreicht, dass die verfügbare Fluorkonzentration je Normvolumeneinheit wesentlich und auf den Verlauf des Ätzverfahrens entscheidende Weise grösser ist als mit den bisher vorgeschlagenen Verbindungen einschliesslich des bereits vorher vorgeschlagenen $SF_6$ der Fall ist. Zwar enthält $SF_6$ je Normvolumeneinheit gleich viel Fluor wie beispielsweise $C_2F_6$. In der Praxis stellt es sich jedoch heraus, dass bei den angewandten Kollabiertemperaturen die Menge weggeätzten $SiO_2$ der theoretisch berechneten Menge auf Basis der Menge angebotenen $SF_6$ nicht entspricht. Die unvollständige Reaktion macht die Steuerung des Ätzverfahrens schwierig und die Reproduzierbarkeit schlecht. Bei z.B. $C_2F_6$ ist dies nicht der Fall, da dies offenbar 100%-ig benutzt wird. Die Verbindungen $C_3F_8$ und $C_4F_{10}$ haben eine noch höhere Fluormenge unter Normverhältnissen.

Bei Verwendung der genannten Fluorverbindungen wird das Fluor in konzentrierter Form angeboten, so dass ein kleinerer Durchsatz (Gasmenge, die je Zeiteinheit zugeführt wird) ausreicht, als bei Verbindungen, die je Molekül weniger Fluor enthalten. Das Ätzverfahren kann nun in der letzten Phase des Kollabierprozesses erfolgen. Die innere Oberfläche des Kanals ist dann soviel kleiner, dass die Verdampfung des Dotierungsmittels nur noch eine geringe Rolle spielt. Die Menge verdampfenden Dotierungsmittels ist der Oberfläche proportional.

Es hat sich daher erwiesen, dass es bei Verwendung von Hexafluoroäthan möglich ist, die sogenannte Senke in dem Brechzahlprofil von Gradientenfasern völlig zu entfernen. Vorzugsweise enthält das gasförmige Ätzmittel 5-30 Volumen % $C_2F_6$, Rest Sauerstoff. Der Druck beim Hindurchführen des Ätzmittels darf höchstens dem Druck der Umgebungsatmosphäre entsprechen. Der Gasdurchsatz beim Kollabierverfahren kann 50-60 sccm betragen. Vorzugsweise wird in einer ersten Phase des Kollabierprozesses durch den zentralen Kanal Sauerstoff hindurchgeführt, bis der Durchmesser des Kanals abgenommen hat und höchstens 1000 μm beträgt, danach wird das fluorhaltige Ätzmittel durch das Rohr hindurch geführt und das Rohr geschlossen. Bei Verwendung von Ätzmitteln, bei denen der Fluor in konzentrierter Form angeboten wird, können geringe Mengen Ätzmittel ausreichen. Das eigentliche Ätzen erfolgt dabei in der allerletzten Phasen des Schliessvorganges des Kanals. Dadurch, dass die innere Oberfläche nun gering ist, ist die Verdampfung aus der durch dem Ätzen freigelegten dotierten Schicht entsprechend klein.

Ausführungsbeispiele der Erfindung sind in der Zeichnung dargestellt und werden im folgenden näher beschrieben. Es zeigen

Fig. 1 das Brechzahlprofil einer optischen Faser gezogen aus einer nicht geätzten Vorform;

Fig. 2 das Brechzahlprofil einer optischen Faser gezogen aus einer mit $CF_4$ geätzten Vorform entsprechend der französischen Patentanmeldung FR-A-2.504.514,

Fig. 3 das Brechzahlprofil einer optischen Faser gezogen aus einer mit $C_2F_6$ geätzten Vorform nach der Erfindung,

Fig. 4 die Dämpfungen abhängig von der Wellenlänge für optische Fasern, die aus einer nicht geätzten Vorform (Kurve A) und aus einer mit $C_2F_6$ geätzten Vorform (Kurve B) gezogen sind,

Fig. 5 das Brechzahlprofil in einer geätzten Vorform, bestimmt mit einem sogenannten Preformanalyzer.

Die untenstehend zu beschreibenden Versuche wurden mit einem Quarzglasrohr (Heralux) mit einem Aussendurchmesser von 21 mm und einem Innendurchmesser von 17 mm, das innerlich mit einer Schicht mit einer Dicke von 450 μm bedeckt war, welche Schicht aus 900 Teilschichten mit einer Dicke von je 0,5 μm aufgebaut war, durchgeführt. Die Schicht hatte eine verlaufende Brechzahl. Die Schicht bestand aus mit zunehmender Menge Germaniumoxid dotiertem Quarzglas. Die Schicht wurde mittels eines nichtisothermen Plasma-Depositionsverfahrens, wie dies in US-E-30635 beschrieben wird, angebracht. Das Kollabieren erfolgte dadurch, dass längs des sich drehenden Rohres ein Brenner hin- und herbewegt wurde.

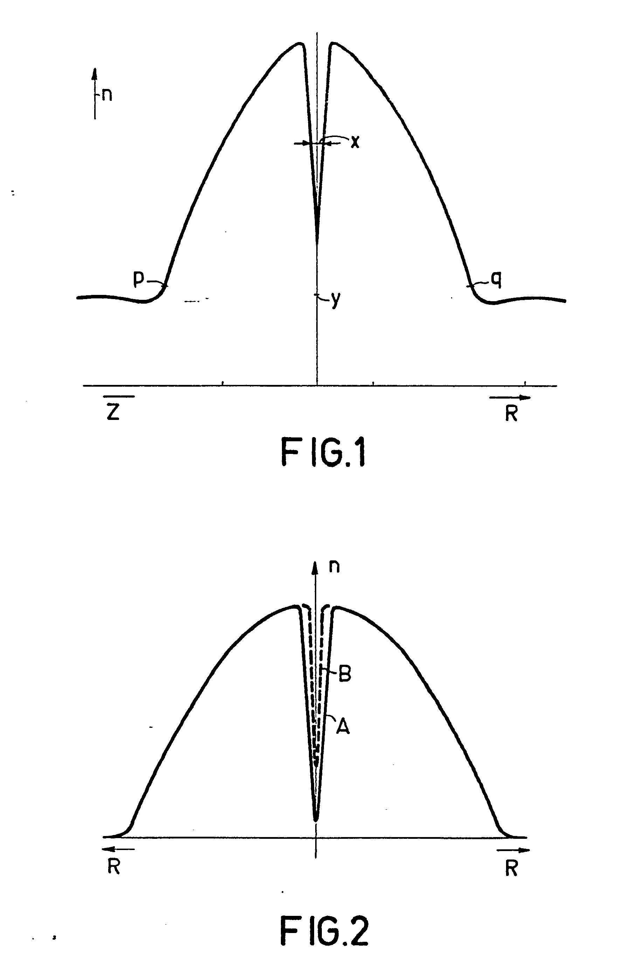

In Fig. 1 ist das Brechzahlprofil einer optischen Faser dargestellt, die dadurch erhalten wurde dass eine Vorform zu einer Faser mit einem Durchmesser von 125 μm ausgezogen wurde. Die Breite der Senke zur Höhe von x beträgt 4,8 % des Abstandes p-q. Die Tiefe der Senke beträgt 78.5 % des Abstandes des Gipfel der Kurve von dem punkt y.

Fig. 2 zeigt den Einfluss des Ätzens einer Vorform mit $CF_4$, wie dies in der französischen Patentanmeldung 2.504.514 beschrieben wird, auf das Brechzahlprofil. Dabei beträgt nach dem Ätzen die Tiefe der Senke noch immer die Hälfte der Tiefe der Senke, wenn nicht geätzt wird. (Kurve A ohne Ätzen, die Kurve B mit Ätzen).

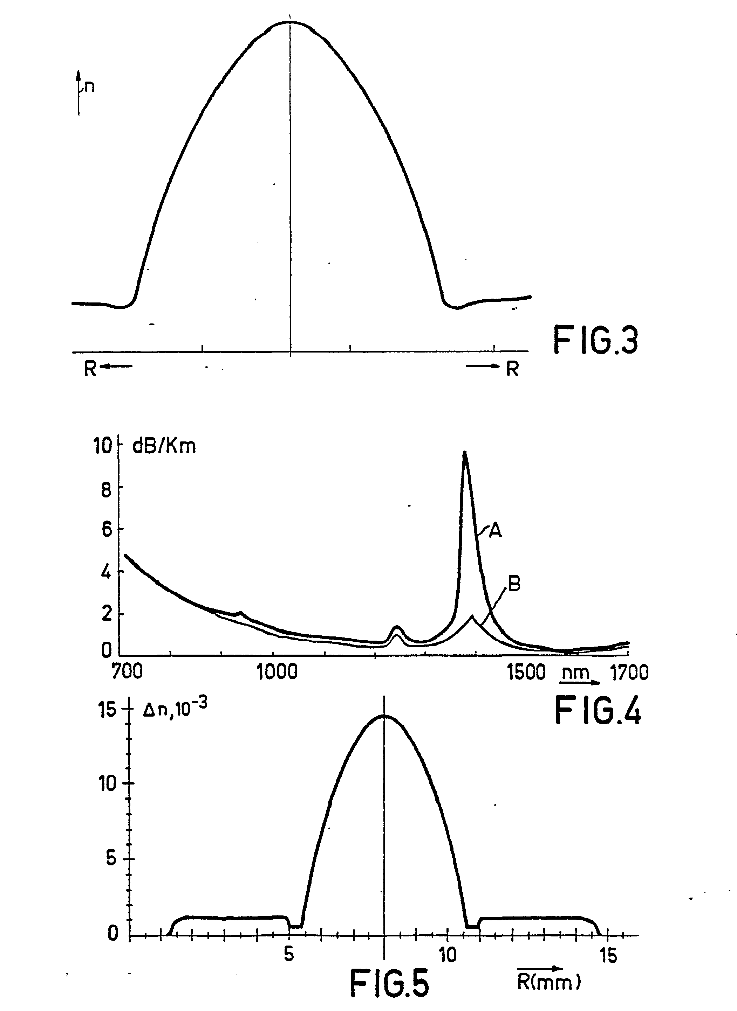

Fig. 3 zeigt das Brechzahlprofil einer optischen Faser, die durch Ziehen aus einer Vorform, die nach der Erfindung geätzt wurde, erhalten worden ist. Dazu wurde beim Bewegen des Brenners längs des Rohres zunächst Sauerstoff hindurchgeführt. Der Sauerstoffdurchsatz wurde dabei proportional zur Verringerung des zentralen Kanals verkleinert. Zu dem Zeitpunkt, wo der Innendurchmesser etwa 1 mm beträgt, wird dem Sauerstoff $C_2F_6$ zugefügt. Das Gasgemisch hat nun die Zusammensetzung 48 sccm $O_2$ + 10 sccm $C_2F_6$. Aus der Figur geht hervor, dass bei der fertigen Faser keine Senke mehr auftritt.

Fig. 4 zeigt zwei Kurven, die die Abhängigkeit der Dämpfung des transportierten Lichtsignals von der Wellenlänge angibt. Die Kurve A bezieht sich auf eine Faser, die aus einer nicht geätzten Vorform erhalten worden ist. Die Kurve B bezieht sich auf eine Faser, die nach der Erfindung erhalten worden ist. Es stellt sich heraus dass die sogenannte Wasserspitze bei 1380 mm durch Ätzen mit $C_2F_6$ wesentlich verringert ist.

Fig. 5 zeigt zum Schluss das Brechzahlprofil in einer Vorform. Daraus geht hervor, dass durch Ätzen mit $C_2F_6$ in einer Vorform die sogenannte Senke fehlt.

**Patentansprüche**

1. Verfahren zum Herstellen einer massiven Vorform zum Ziehen optischer Fasern, worin eine Vorform, die zentral einen sich in der Längsrichtung erstreckenden Kanal aufweist und wobei wenigstens derjenige Teil der Vorform, der den Kanal begrenzt, aus mit einem im Vergleich zu $SiO_2$ relativ flüchtigen Dotierungsmittel dotiertem Quarzglas besteht, auf eine Temperatur erhitzt wird, bei der der Kanal sich spontan schliesst und unter Hindurchführung eines Ätzmittels, das aus einem sauerstoff- und fluorhaltigen gasformigen Gemisch besteht, eine massive Vorform gleicher Länge gebildet wird, dadurch gekennzeichnet, dass das fluorhaltige Gas des Ätzmittels, das beim Schliessen durch den zentralen Kanal hindurchgeführt wird, aus einer oder mehreren gasförmigen Kohlenstofffluorverbindung(en) aus der Gruppe $C_2F_6$, $C_3F_8$ und $C_4F_{10}$ besteht.

2. Verfahren nach Anspruch 1, dadurch gekennzeichnet, dass beim Schliessen Sauerstoff durch den zentralen Kanal hindurchgeführt wird bis der Durchmesser des Kanals auf mindestens 1 mm abgenommen hat, wonach das Gemisch aus Sauerstoff und einer oder mehreren Kohlenstofffluorverbindung(en) aus der Gruppe $C_2F_6$, $C_3F_8$ und $C_4F_{10}$ durch den Kanal hindurchgeführt wird.

3. Verfahren nach Anspruch 1, dadurch gekennzeichnet, dass die Kohlenstofffluorverbindung(en) 10 - 30 Vol.% des Gemisches formen.

4. Verfahren nach Anspruch 1, dadurch gekennzeichnet, dass der Druck in dem zentralen Hohlraum beim Schliessen dem Druck der umgebenden Atmosphäre entspricht.

5. Verfahren nach Anspruch 1, dadurch gekennzeichnet, dass der Gasdurchsatz beim Schliessen des Kanals 50-60 sccm beträgt.

6. Verfahren zum Herstellen einer optischen Faser, dadurch gekennzeichnet, dass eine massive Vorform, erhalten nach dem Verfahren nach den Ansprüchen 1-4, auf die Ziehtemperatur erhitzt und zu einer optischen Faser ausgezogen wird.

## Claims

1. A method of manufacturing a solid preform for drawing optical fibres, in which method a preform comprising a central duct extending in the longitudinal direction and wherein at least the part of the preform bounding the duct consists of quartz glass doped with a dopant which is more volatile than $SiO_2$ is heated while passing an etchant consisting of an oxygen-containing and fluorine-containing gaseous mixture through the duct to a temperature at which the duct closes spontaneously so as to form a solid preform of the same length, characterized in that the fluorine-containing gas of the etchant which until closing is passed through the central duct consists of one or more gaseous fluorocarbon compound(s) from the group $C_2F_6$, $C_3F_8$ and $C_4F_{10}$

2. A method as claimed in Claim 1, characterized in that until closing oxygen is passed through the central duct until the diameter of the duct has been reduced to at least 1 mm, after which the mixture of oxygen and one or more fluorocarbon compound(s) from the group $C_2F_6$, $C_3F_8$ and $C_4F_{10}$ is passed through the duct.

3. A method as claimed in Claim 1, characterized in that the fluorocarbon compound(s) constitute 10-30% by volume of the mixture.

4. A method as claimed in Claim 1, characterized in that the pressure in the central duct during closing is equal to the pressure of the ambient atmosphere.

5. A method as claimed in Claim 1, characterized in that the gas supply during closing the duct is 50-60 sccm.

6. A method of manufacturing an optical fibre, characterized in that a solid preform obtained by means of the method as claimed in any of Claims 1 to 4 is heated to the drawing temperature and is drawn to form an optical fibre.

## Revendications

1. Procédé pour la réalisation d'une préforme massive pour l'étirage de fibres optiques, selon lequel une préforme, dont le centre présente un canal s'étendant dans la direction longitudinale et dont au moins la partie délimitant le canal est constituée par un verre de quartz dopé à l'aide d'un agent de dopage assez volatil par rapport au $SiO_2$, et, tout en faisant traverser le canal par un agent de décapage constitué par un mélange gazeux contenant de l'oxygène et du fluor est portée à une température à laquelle le canal se ferme, de sorte qu'il se forme une préforme massive de longueur égale, caractérisé en ce que le gaz contenant du fluor de l'agent de décapage traversant le canal central pendant la fermeture est constitué par un ou plusieurs composés de fluor-carbone gazeux choisi(s) dans le groupe $C_2F_6$, $C_3F_8$ et $C_4F_{10}$.

2. Procédé selon la revendication 1, caractérisé en ce que, lors de la fermeture, de l'oxygène traverse le canal central jusqu'à ce que le diamètre du canal soit réduit à au moins 1 mm, le mélange en oxygène et l'un ou plusieurs composés de fluor-carbone du groupe $C_2F_6$, $C_3F_8$ et $C_4F_{10}$ traversant le canal.

3. Procédé selon la revendication 1, caractérisé en ce que le composé de fluor-carbone contient 10 à 30% en volume du mélange.

4. Procédé selon la revendication 1, caractérisé en ce que la pression dans l'espace creux central pendant la fermeturs correspond à la pression de l'atmosphère ambiante.

5. Procédé selon la revendication 1, caractérisé en ce que le débit de gaz pendant la fermeture du canal est de 50 à 60 sccm.

6. Procédé pour la réalisation d'une fibre optique caractérisé en ce qu'une préforme massive obtenue conformément au procédé selon la revendication 1 à 4 est portée à la température d'etirage et est étirée en une fibre optique.

FIG.1

FIG.2

FIG.3

FIG.4

FIG.5